# EUROPEAN PATENT SPECIFICATION

(11) **EP 0 517 446 B1**
(45) Date of publication and mention of the grant of the patent: **15.07.1998**
(21) Application number: 92304913.4
(22) Date of filing: 29.05.1992
(51) Int. Cl.: H04Q 3/545, H04Q 11/04

(54) **A replicating method for a switching system, in particular a telephone exchange**
Redundanz-Verfahren für ein Vermittlungssystem, insbesondere eine Fernsprechvermittlungsanlage
Méthode de rédondance pour un système de commutation, particulièrement une central téléphonique

(30) Priority: 03.06.1991 FI 912669
(43) Date of publication of application: 09.12.1992
(73) Proprietor: NOKIA TELECOMMUNICATIONS OY, 02150 Espoo (FI)
(72) Inventor: Kantola, Raimo, SF-00530 Helsinki (FI); Syväniemi, Martti, SF-02430 Masala (FI)
(74) Representative: Howden, Christopher Andrew

(56) References cited:
- DISCOVERY vol. 22, first quarter 1991, FI pages 32 - 39 KANTOLA 'New fault- tolerance design: developments in software system architecture of the Nokia DX 200'
- INTERNATIONAL SWITCHING SYMPOSIUM 1990, VOLUME 5, SESSION C8, PAPER 3 STOCKHOLM, SE pages 187 - 193 , XP130947 GREEN ET AL. 'The evolution of the System X control architecture'
- PROCEEDINGS OF THE TENTH ACM SYMPOSIUM ON OPERATING SYSTEMS PRINCIPLES vol. 19, no. 5, December 1985, ORCAS ISLAND, US pages 79 - 85 BIRMAN 'Replication and fault-tolerance in the ISIS system'
- ELECTRONICS AND COMMUNICATIONS IN JAPAN vol. 72, no. 6, June 1989, NEW YORK, US pages 1 - 14 YAMADA ET AL. 'Fault recovery processing in a switching control multiprocessor'

## Description

The present invention relates to a replicating method for a switching system, the system comprising switching means for selectively switching connections between a first group of transmission channels and a second group of transmission channels, and a switching control means comprising at least one active control unit connected to the internal data transmission means of the switching control means, said active control unit having, permanently or when necessary, a replicating hot-standby spare unit connected to said data transmission means, so that the switching control process performed by the active control unit includes predetermined subprocesses communicating with each other, and the spare unit performs similar subprocesses of the switching control in parallel.

Recently, distributed computer systems have been implemented in the control systems of public switched telephone exchanges. In such a situation, the control of a telephone exchange is distributed to several computers connected with a relatively high-speed parallel synchronous message bus. In such a telephone exchange or equivalent other switching system, it is endeavoured to support the system operation by replicating at least part of the distributed control computers. It should then be possible to effect the replication of the control computers so as not to unreasonably consume the performance capacity of the control computers and without any need for costly special equipment. Requirements for the replication of distributed computers in a telephone exchange environment have been accounted for in the article *New fault-tolerance design: developments in* *software system architecture of the Nokia DX 200,* Raimo Kantola, Discovery, Volume 22, First Quarter 1991, pp. 32-39.

The following solutions, for example, have hitherto been employed in the replication of distributed computer systems: In a solution utilizing microsynchronization of computers, for instance, two computers controlled by special equipment execute precisely the same computer instructions at precisely the same moment. The advantage of the microsynchronization method is its transparency to the application software. The disadvantage resides in the costliness of the special equipment and the difficulty, even impossibility, of effectively implementing the method to N+1 supported computers, particularly if N is at least several dozen. In the N+1 redundancy mode, N similar computers execute useful tasks that are of the same type but independent, using the same software. One computer is a spare unit to be taken into use if one of said N computers fails, or for example when the call-processing architecture so requires. The advantage of the N+1 equipment redundancy scheme is its cost-effectiveness and its compatibility with the 2N method, with the distinction that the connection of the spare unit to the active unit must always be carried out prior to changeover.

Also, solutions have earlier been implemented where the redundant execution of the entire control has been left in the charge of the application software, so that the state automaton of the program has comprised the necessary state changeovers for keeping the standby unit up-to-date with that which is executed by the active computer. The drawback of this replicating method lies in that the application must solve two problems at one time: its actual task and the support therefor. This complicates the development of applications. Another drawback is that this replication method does not yield a uniform execution, as a result of which maintenance of the applications is expensive.

Further, methods shielding the replications from the applications have been developed, and these have aimed at correctness of computation in all performing units and have therefore been heavy and have consumed computer throughput. In these solutions, the correctness of the performance has superseded the availability of the system, and therefore they are not particularly suitable for a switching environment, such as a telephone exchange, where high availability overrides the importance of absolute correctness of every discrete minor function.

It is the object of the invention to achieve a replication method allowing the solving of replication-related problems separately from application problems in a distributed switching environment, such as a telephone exchange, in a way not inordinately consuming the performance capacity of computers employing the invention, and not requiring expensive special equipment.

According to the invention there is provided a replicating method for a switching system, the system comprising switching means (1) for selectively switching connections between a first group of transmission channels (L1....LN) and a second group of transmission channels (L'1....L'N), and a switching control means (2) comprising at least one active control unit (WO) connected to internal data transmission means (22) of the switching control means (2), said at least one active control unit having associated, permanently or when necessary, a replicating hot-standby spare unit (SP) arranged to be taken into use in case of failure of the active unit, and connected to said data transmission means (22), so that the switching control process performed by the at least one active control unit (WO) includes predetermined subprocesses (a, b, c, d) communicating with each other, and the spare unit (SP) performs similar subprocesses of the switching control in parallel, characterised by
- performing the subprocesses of the at least one active control unit (WO) in predetermined asynchronous groups,
- sending the messages between said groups *via* said data transmission means and allowing within each subprocess group the subprocesses to send messages to one another without using said data transmission means (22),
- performing the subprocesses of the spare unit (SP) in corresponding supporting asynchronous spare groups, said spare groups being capable of sending messages *via* said data transmission means (22),
- allowing within each spare group (SP) the subprocesses to send messages to one another independently of the corresponding active subprocess group and without using said data transmission means (22),
- ensuring the relative consistency of the operation of the at least one active control unit (WO) and the spare control unit (SP) in a way such that the messages (4) vital to the switching of the connection being sent from a first subprocess group to a second subprocess group of the at least one active control unit are sent *via* the data transmission means also to the corresponding replicating spare group associated to that second subprocess group, while replicated messages are discarded.

In the method of the invention, the processes performed by two or more computers operating in parallel are replicated in groups containing as many subprocesses as possible, so that the corresponding subprocesses within the corresponding groups of two units operating in parallel operate independently of one another (asynchronously), but there is no inconsistency between the processes performed by the parallel subprocess groups. The last mentioned object is achieved in such a way that information vital to the switching of the connection and possibly also invoicing data is transmitted *via* a common data transmission means, such as a data bus, also to the spare computer operating in parallel. By means of the method of the invention, the same program can be executed in two or more computers operating in parallel virtually simultaneously, so that said computers externally seem to transmit and receive the same messages in the same order. The arrangement is such that it imposes only a slight additional load on said computers as they execute switching programs relating for instance to the signalling or control of call switching in a telephone network. On the other hand, the method does not guarantee the instantaneous correctness of two executions, but that an operation executed by computers operating in parallel does not contradict the operation executed by the master computer.

The method of the invention can easily be implemented with software, and it works equally well for 2N and N+1 supporting computer units. It suffices that all computer units in the system are connected with a high-speed data transmission means, and using this data transmission means the computers can send messages to one another. The data transmission means cannot be regarded as an expensive special equipment, since it is an essential component in any distributed switching system, fully irrespective of the replication. The method of the invention is well supported by a data transmission means between the computers that supports multicast and broadcast message delivery, but this is not a prerequisite for the use of the method, even though it enhances the invented method by diminishing the amount of message transmissions needed and thereby reduces the additional load on the computers appertaining to the redundancy and resulting from the method.

The software support required by the method can mainly reside in program blocks separate from the applications and in run-time subprogram libraries. Thus all possible differences in the replicated execution of the different applications only relate to different uses of the method of the invention. The uses can be harmonized for instance by means of design rules much easier than the methods of application of the replicated execution.

The invention will now be explained in more detail by means of working examples with reference to the accompanying drawings, wherein
Figure 1 is a block diagram of a telephone exchange where the method of the invention can be implemented,
Figure 2 is a diagram illustrating data transmission between replicated process blocks,
Figure 3 illustrates the build-up of replicated process blocks from subprocesses, and
Figure 4 is a signalling diagram illustrating the allocation of the subprocesses in accordance with the method of the invention.

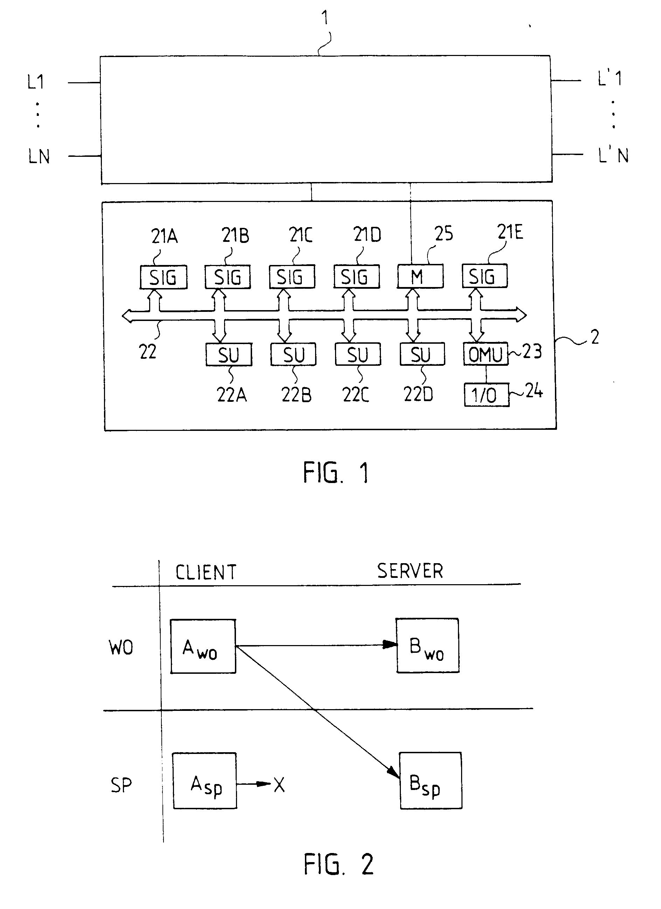

In the following, the invention will be explained in connection with a digital telephone exchange, but the replication method of the invention can be implemented in any other similar transmission-technical switching facilities where connections between transmission channels are switched. In Figure 1, the controlled object is a switching element or switching field 1, controlled by a functionally distributed control element 2 in which mainly the generic unit types are shown. The switching element 1 may contain the switching matrix as well as necessary signalling and speech processing equipment. The switching element 1 switches, under the control of the control element 2, connections between a first group of transmission channels or lines, L1...LN, and a second group of transmission channels L'1...L'N.

In the control element 2, the control functions have been distributed to several microprocessor units 21A - 21E, 22A - 22D, 23 and 25, interconnected by a high-speed parallel synchronous message bus. Instead of a message bus, any other suitable data transmission means can be used for the internal data transmission of the control element 2.

Figure 1 shows two functionally dedicated control computer types, namely a marker 25 for the switch control and an operations and maintenance unit 23. Furthermore, different signalling units (SIG) 21A-21E and service function units (SU) 22A-22D are shown.

At least one of the signalling units 21 is allocated to inbound call processing, and thus its functions comprise at least processing of inbound signalling, inbound call control, call charging and resource management. By resources are meant in this connection for instance traffic channel time slots, call identification and connections.

At least one of the signalling units 21 operates the signalling of an outbound call, and thus it comprises outbound call control and processing of outbound signalling.

The marker 25 comprises connections handling.

One or more of the service units 22 comprises program blocks for subscriber, line, trunk, and routing data retrieval services. Furthermore, one or several service units may contain call statistics and charging data collection.

In accordance with the invention, at least some of the above-stated computers are supported by replicating the functions, that is, by using in parallel two or more computer units virtually executing the same processes simultaneously. The invention will be explained in the following by way of example in connection with a case where in parallel with one active control unit, a spare control unit serving on the hot-standby principle is operative, so that it can immediately be taken into use in a case of failure of the active unit. Such a replication principle is termed the 2N method. However, the invention is also intended to be implemented in connection with the N+1 replication scheme, and then in the event of control unit changeover the only spare unit must first be warmed up to the hot-standby state together with the unit to be replaced, prior to being taken into use. The final situation then corresponds to the 2N redundancy scheme.

The method of the invention aims at replacing the active unit (WO) by the spare unit (SP) in such a way that the unit changeover does not cause disconnection of established connections or, at least not substantially, interruption of connections in the set-up phase. This object does not require instantaneous correctness of the functions of the active unit and the spare unit, but it suffices to guarantee that there is no such relative inconsistency between the operation of the active unit and the spare unit that would cause call charging, switching, or routing mix-up in a situation where the spare unit is taken into use.

In the method of the invention, this principle is made use of by performing the subprocesses of a switching control process to be executed for a certain call or connection in relative asynchronous groups, sending messages to one another via a data bus, such as bus 22. The corresponding subprocesses of the spare unit constitute identical spare groups, which are also capable of sending messages via the data bus 22. The subprocess group in the active unit WO and the replicating spare group therefor in the spare unit SP are asynchronous in relation to one another, so that the concurrent subprocesses within these groups are executed independently. The subprocesses within the group communicate with each other directly, and the groups send messages to one another via a common data bus 22.

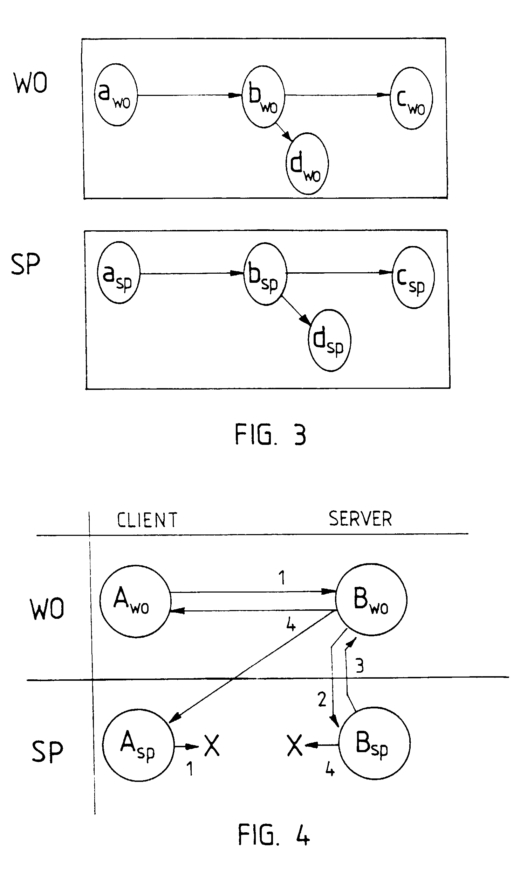

Figure 3 shows an active subprocess group WO comprising subprocesses a_{wo}, b_{wo}, c_{wo} and d_{wo}. In Figure 3, the replicating group SP of the spare unit comprises corresponding subprocesses a_{SP}, b_{SP}, c_{SP} and d_{SP}. As large groups as possible are formed of the subprocess groups of Figure 3, so that two subprocesses communicating with one another are placed in different subprocess groups if said subprocesses are located in different computer units or if they deliver to each other connection or charging information that is vital to connection redundancy.

Figure 2 shows two active subprocess groups A_{WO} and B_{WO} and the replicating subgroups A_{SP} and B_{SP} respectively. As was stated previously, the subprocess groups communicate with one another via a common data bus 22. In Figure 2, the group A_{WO} send to another active group B_{WO} a message that may contain for instance information on how a call is to be routed from line L1 via the switching element to one of lines L'1...L'N. The subprocess group B_{WO} carries on the control process on the basis of this information. Also the spare group A_{SP} has formed routing information that it sends to the common bus 22 as a message, denoted by the symbol X in Figure 2. Since the instantaneous correctness of the operation of the groups A_{WO} and A_{SP} is not guaranteed in the method of the invention, the routing information sent by the group A_{SP} may be different from the routing information sent by the group A_{WO}. If the routing information provided by the message X constituted the starting data for the processing in the spare group B_{SP}, the replicated groups B_{WO} and B_{SP} would carry on the routing of the call differently, and this would lead, from a possible fault situation, to the call being lost if the group B_{WO} had to be replaced with the spare group B_{SP}. Such relative inconsistencies between the operation of the active unit WO and the spare unit SP are avoided by sending vital messages sent by one subprocess group A_{WO} of the active unit WO to another active subprocess group B_{WO} primarily also to another corresponding spare group B_{SP} of the spare unit SP as starting values for further processing. In that case, the message X sent by the spare group A_{SP} of the spare unit SP will be discarded. In this manner, the spare unit SP can be "updated" with the vital information of the active unit so as to avoid release of connections on account of inconsistency of information or other mix-up in connection with the taking into use of a possible spare unit.

Each of the subprocess groups described above can contain a plurality of identical subprocesses, which can be allocated instantaneously or permanently to a certain call. Each of these subprocesses has a process identifier of its own, used to address the messages to the subprocesses.

The subprocess group can request another subprocess group to allocate subprocesses for its use. In that case, the requesting subprocess group is called the client and the process requested to execute a service function is called the server. In the replication method of the invention, it is important for avoiding inconsistencies that both in the active group WO and in the spare group SP, subprocesses having the same subprocess identifier are allocated. This is guaranteed in one embodiment of the invention in the way illustrated in Figure 4. The client, i.e. the active group A_{WO}, sends to the server, i.e. another active group B_{WO}, an allocation request message 1. The spare group A_{SP} of the spare unit SP sends a similar message which, however, is discarded. The server B_{WO} selects from among its free subprocesses one or more subprocesses for serving the client A_{WO}. Hereafter the server B_{WO} sends to the server B_{SP} of the spare unit SP an allocation request message containing the process identifier of the selected subprocess or processes. The spare group B_{SP} allocates the subprocess having the same subprocess identifier, and sends an acknowledgement message 3 to the active server B_{WO}. The server B_{WO} further sends an acknowledgement message 4 containing the identifiers of the allocated subprocess or subprocesses, both to the client A_{WO} of the active unit WO and to the client A_{SP} of the spare unit SP. The server B_{SP} of the spare unit SP sends a similar acknowledgement message which, however, is discarded.

Further, one embodiment of the method of the invention aims at ensuring that after a service task has ended, the allocated subprocesses are released in the active unit WO as well as in the spare unit SP. In view of this, subsequent to the subprocess allocated in the active subprocess group having completed its task, said subprocess group sends a release message to the corresponding spare group of the spare unit SP to release the corresponding subprocess allocated therein and having the same subprocess identifier. When said spare group receives the release message, it releases the pertinent subprocess and sends an acknowledgement back to the subprocess group that sent the release message.

As has been set forth previously, the invention can in its minimum be implemented in a system having two computers: an active computer and a spare computer replicating it. However, it is obvious to one skilled in the art on the basis of the above disclosure that the invention can also be used in cases where there are several active computers and spare computers, or alongside one active computer there are several supporting spare computers.

The figures and the explanation pertaining thereto are only intended to illustrate the present invention. The method of the invention can vary in its details within the scope of the appended claims.

## Claims

1. A replicating method for a switching system, the system comprising switching means (1) for selectively switching connections between a first group of transmission channels (L1...LN) and a second group of transmission channels (L'1...L'N), and a switching control means (2) comprising at least one active control unit (21-25) connected to internal data transmission means (22) of the switching control means (2), said at least one active control unit having associated, permanently or when necessary, a replicating hot-standby spare unit (SP) arranged to be taken into use in case of failure of the active unit, and connected to said data transmission means (22), so that the switching control process performed by the at least one active control unit (WO) includes predetermined subprocesses (a, b, c, d) communicating with each other, and the spare unit (SP) performs similar subprocesses of the switching control in parallel, **characterized** by
- performing the subprocesses (A_{WO}-D_{WO}) of the at least one active control unit (WO) in predetermined asynchronous groups,
- sending the messages between said groups via said data transmission means and allowing within each subprocess group the subprocesses to send messages to one another without using said data transmissionmeans (22),
- performing the subprocesses (A_{SP}-D_{SP}) of the spare unit (SP) in corresponding supporting asynchronous spare groups, said spare groups being capable of sending messages via said data transmission means (22),
- allowing within each spare group (SP) the subprocesses to send messages to one another independently of the corresponding active subprocess group and without using said data transmission means (22),
- ensuring the relative consistency of the operation of the at least one active control unit (WO) and the spare control unit (SP) in a way such that the messages (4) vital to the switching of the connection being sent from a first subprocess group to a second subprocess group of the at least one active control unit are sent via the data transmission means also to the corresponding replicating spare group associated to that second subprocess group, while replicated messages are discarded.

2. A method as claimed in claim 1, **characterized** in that as large groups as possible are formed of the subprocesses of the active control unit (WO), so that two subprocesses communicating with one another are placed in different subprocess groups if said subprocesses are located in different computer units or if they deliver to each other connection or charging information that is vital to connection redundancy.

3. A method as claimed in claim 1 or 2, **characterized** in that when an active subprocess group (A_{WO}) requesting service sends to another active subprocess group (B_{WO}) an allocation request (1), the other active subprocess group (B_{WO}) allocates to the service of said first subprocess group certain subprocesses, ensures that a spare group (B_{SP}) corresponding thereto allocates exactly the same subprocesses, and thereafter sends the identifiers of these allocated subprocesses as an acknowledgement (4) to said first active subprocess group (A_{WO}) and to the spare group (A_{SP}) corresponding thereto.

4. A method as claimed in claim 3, **characterized** in that when the subprocess allocated for service in the active subprocess group (B_{WO}) has completed its task, it sends a release message to the corresponding spare group (B_{SP}) to release the corresponding subprocess allocated therein, said spare group (B_{SP}) receives the release message, releases said subprocess, and sends an acknowledgement to the active subprocess group.

5. A method as claimed in claim 1, **characterized** in that message switching via the data transmission means (22) is performed on the broadcast or multicast principle.

## Patentansprüche

1. Duplizierverfahren für ein Schaltsystem, wobei das System folgendes aufweist: eine Schalteinrichtung (1), um Verbindungen zwischen einer ersten Gruppe von Übertragungskanälen (L1 ... LN) und einer zweiten Gruppe von Übertragungskanälen (L'1 ... L'N) selektiv zu schalten, und eine Schaltsteuerungseinrichtung (2), die wenigstens eine aktive Steuereinrichtung (21 bis 25) aufweist, die mit einer internen Datenübertragungseinrichtung (22) der Schaltsteuerungseinrichtung (2) verbunden ist, wobei der wenigstens einen aktiven Steuereinrichtung, entweder permanent oder falls erforderlich, eine duplizierende Hot-Standby-Ersatzeinheit (SP) zugeordnet ist, die so angeordnet ist, daß sie im Falle eines Ausfalls der aktiven Steuereinrichtung in Betrieb genommen wird, und die mit der Datenübertragungseinrichtung (22) verbunden ist, so daß der Schaltsteuerungsprozeß, der von der wenigstens einen aktiven Steuereinrichtung (WO) durchgeführt wird, vorbestimmte Unterprozesse (a, b, c, d) aufweist, die miteinander kommunizieren, und wobei die Ersatzeinheit (SP) ähnliche Unterprozesse der Schaltsteuerung parallel durchführt,
gekennzeichnet durch die folgenden Schritte:
- die Unterprozesse (A_{wo}-D_{wo}) der wenigstens einen aktiven Steuereinrichtung (WO) werden in vorbestimmten asynchronen Gruppen durchgeführt,
- die Nachrichten zwischen den Gruppen werden über die Datenübertragungseinrichtung gesendet und ermöglichen es innerhalb jeder Unterprozeßgruppe, daß die Unterprozesse Nachrichten einander zusenden, ohne die Datenübertragungseinrichtung (22) zu benutzen,
- die Unterprozesse (Aₛₚ-Dₛₚ) der Ersatzeinheit (SP) werden in entsprechenden unterstützenden asynchronen Ersatzgruppen durchgeführt, wobei die Ersatzgruppen imstande sind, Nachrichten über die Datenübertragungseinrichtung (22) zu senden,
- innerhalb jeder Ersatzgruppe (SP) ist es möglich, daß die Unterprozesse unabhängig von den entsprechenden aktiven Unterprozeßgruppen und, ohne die Datenübertragungseinrichtung (22) zu benutzen, einander Nachrichten zusenden,
- es wird die relative Konsistenz des Betriebes der wenigstens einen aktiven Steuereinrichtung (WO) und der Ersatzsteuerungseinheit (SP) gewährleistet, derart, daß die Nachrichten (4), die für das Schalten der Verbindung unerläßlich sind und die von einer ersten Unterprozeßgruppe zu einer zweiten Unterprozeßgruppe der wenigstens einen aktiven Steuereinrichtung gesendet werden, über die Datenübertragungseinrichtung auch zu der duplizierenden Ersatzgruppe gesendet werden, die der zweiten Unterprozeßgruppe zugeordnet ist, während duplizierte Nachrichten verworfen werden.

2. Verfahren nach Anspruch 1,
dadurch gekennzeichnet,
daß möglichst große Gruppen aus den Unterprozessen der aktiven Steuereinrichtung (WO) gebildet werden, so daß zwei miteinander kommunizierende Unterprozesse in verschiedenen Unterprozeßgruppen plaziert werden, wenn die Unterprozesse in verschiedenen Computereinheiten positioniert sind oder wenn sie einander Verbindungs- oder Gebühreninformationen liefern, die für eine Verbindungsredundanz unerläßlich sind.

3. Verfahren nach Anspruch 1 oder 2,
dadurch gekennzeichnet,
daß dann, wenn eine aktive Unterprozeßgruppe (A_{wo}), die einen Service anfordert, einer anderen aktiven Unterprozeßgruppe (B_{wo}) eine Zuordnungsanforderung (1) sendet, die andere aktive Unterprozeßgruppe (B_{wo}) dem Service der genannten ersten Unterprozeßgruppe gewisse Unterprozesse zuordnet, dann sicherstellt, daß eine dieser aktiven Unterprozeßgruppe (B_{wo}) entsprechende Ersatzgruppe (Bₛₚ) exakt die gleichen Unterprozesse zuordnet, und danach die Kennungen dieser zugeordneten Unterprozesse als eine Bestätigung (4) an die erste aktive Unterprozeßgruppe (A_{wo}) und an die ihr entsprechende Ersatzgruppe (Aₛₚ) sendet.

4. Verfahren nach Anspruch 3,
dadurch gekennzeichnet,
daß dann, wenn der Unterprozeß, der für einen Service in der aktiven Unterprozeßgruppe (B_{wo}) zugeordnet ist, seine Aufgabe beendet hat, er eine Freigabenachricht an die entsprechende Ersatzgruppe (Bₛₚ) sendet, um den dort zugeordneten entsprechenden Unterprozeß freizugeben, wobei die Ersatzgruppe (Bₛₚ) die Freigabenachricht empfängt, den Unterprozeß freigibt und dann eine Bestätigung an die aktive Unterprozeßgruppe sendet.

5. Verfahren nach Anspruch 1,
dadurch gekennzeichnet,
daß die Nachrichtenvermittlung über die Datenübertragungseinrichtung (22) gemäß dem Rundfunk- oder Multicasting-Prinzip durchgeführt wird.

## Revendications

1. Procédé de redondance pour un système de commutation, le système comprenant des moyens (1) pour commuter sélectivement des connexions entre un premier groupe de voies de transmission (L1 ... LN) et un deuxième groupe de voies de transmission (L'1 ... L'N), et des moyens (2) de commande des commutations, comprenant au moins une unité de commande active (21 - 25) connectée à des moyens internes de transmission de données (22) des moyens (2) de commande des commutations, chaque unité de commande des commutations active, présentant, en association permanente ou associée selon les besoins, une unité redondante de secours immédiat (SP) prévue pour être utilisée en cas de défaillance de l'unité active, et connectée aux moyens de transmission de données (22), de manière à ce que le processus de commande de la commutation, exécuté par chaque unité de commande active (WO) inclue des sous-processus prédéterminés (a, b, c, d) qui communiquent entre eux, et que l'unité de secours (SP) exécute en parallèle des sous-processus similaires de commande de la commutation,
caractérisé par :
l'exécution des sous-processus (a_{WO} - d_{WO}) de chaque unité de commande active (WO), par groupes asynchrones prédéterminés,
l'envoi des messages entre lesdits groupes par les moyens de transmission de données, et l'autorisation, à l'intérieur de chaque groupe de sous-processus, d'envoyer des messages entre ces derniers sans utiliser les moyens de transmission de données (22),
l'exécution des sous-processus (asp - dsp) de l'unité de secours (SP) par groupes de secours asynchrones correspondants de support, ces groupes de secours étant aptes à envoyer des messages par les moyens de transmission de données (22),
l'autorisation, à l'intérieur de chaque groupe de secours (SP), donnée aux sous-processus de s'envoyer entre eux des mesages, indépendamment du groupe de sous-processus actif correspondant, et sans utiliser les moyens de transmission de données (22),
la garantie d'une cohérence relative de fonctionnement entre chaque unité de commande active (WO) et l'unité de commande de secours (SP), de manière à ce que les messages (4) vitaux pour la commutation de la connexion envoyés d'un premier groupe de sous-processus vers un deuxième groupe de sous-processus de chaque unité de commande soient envoyés par les moyens de transmission de données également au groupe de secours correspondant associé à ce deuxième groupe de sous-processus, tout en écartant les messages redondants.

2. Procédé selon la revendication 1,
caractérisé en ce que les sous-processus de l'unité de commande active (WO) sont réunis en groupes aussi importants que possible, de manière à ce que deux sous-processus qui communiquent entre eux soient placés dans différents groupes de sous-processus si ces sous-processus sont placés dans différentes unités d'ordinateur, ou s'ils se fournissent entre eux des informations de connexion ou de chargement vitales à la redondance de la connexion.

3. Procédé selon la revendication 1 ou 2,
caractérisé en ce que, lorsqu'un groupe de sous-processus actif (A_{WO}) qui demande un service envoie à un autre groupe de sous-processus actif (B_{WO}) une requête d'attribution (1), l'autre groupe de sous-processus actif (B_{WO}) attribue au service dudit premier groupe de sous-processus certains sous-processus, garantit qu'un groupe de secours (B_{SP}) correspondant attribue exactement les mêmes sous-processus, et envoie ensuite les identificateurs de ces sous-processus attribués en tant qu'accusé de réception (4) au premier groupe de sous-processus actif (A_{WO}) et au groupe de secours (A_{SP}) correspondant.

4. Procédé selon la revendication 3,
caractérisé en ce que, lorsque le sous-processus attribué pour servir dans le groupe de sous-processus actif (B_{WO}) a accompli sa tâche, il envoie un message de libération au groupe de secours correspondant (B_{SP}) pour libérer le sous-processus correspondant attribué à celui-ci, ledit groupe de secours (B_{SP}) reçoit le message de libération, libère le sous-processus, et envoie un accusé de réception au groupe de sous-processus actif.

5. Procédé selon la revendication 1,
caractérisé en ce que la commutation de messages par les moyens de transmission de données (22) est exécutée selon le principe de la diffusion ou multidestinataire.
